# EUROPÄISCHE PATENTSCHRIFT

(11) **EP 4 190 417 B1**
(45) Veröffentlichungstag und Bekanntmachung des Hinweises auf die Patenterteilung: **19.06.2024**
(21) Anmeldenummer: 21212518.1
(22) Anmeldetag: 06.12.2021
(51) Int. Cl.: A63F 9/06, A63F 9/24, A63F 13/27, A63F 13/213, A63H 33/22, A63J 19/00

(54) **SPIELZIMMERSYSTEM**
GAME ROOM SYSTEM
SYSTÈME DE SALLE DE JEUX

(43) Veröffentlichungstag der Anmeldung: 07.06.2023
(73) Patentinhaber: Abels, Artur, 50706 Tartu (EE); Vohmjanin, Vadim, 13424 Tallinn (EE); Gerassimov, Vadim, 11311 Tallinn (EE)
(72) Erfinder: Abels, Artur, 50706 Tartu (EE); Vohmjanin, Vadim, 13424 Tallinn (EE); Gerassimov, Vadim, 11311 Tallinn (EE)
(74) Vertreter: Sloboshanin, Sergej

(56) Entgegenhaltungen:
- WO-A1-2017/029063
- US-A1- 2013 102 222
- Mark Rober: "GLOWING WALL DIY- EASY and AWESOME", , 11. Oktober 2016 (2016-10-11), XP055925159, Gefunden im Internet: URL:https://www.youtube.com/watch?v=I6IqoS Atjb0 [gefunden am 2022-05-25]

## Beschreibung

### TECHNISCHES GEBIET

Die vorliegende Erfindung bezieht sich auf eine technische Einrichtung für einen Spielraum. Insbesondere wird ein Spielraumsystem vorgeschlagen, dessen Prinzip auf dem Effekt der Anregung der Leuchtstoffbeschichtung einer Wand in einem Spielraum durch eine gepulste Lichtquelle beruht.

Derzeit werden Leuchtstoffe, d. h. Stoffe, die in der Lage sind, die von ihnen absorbierte Energie in Lichtstrahlung umzuwandeln, bei einer Vielzahl menschlicher Tätigkeiten eingesetzt. Beschichtungen aus Leuchtstoffen können insbesondere im Bildungswesen zur Herstellung von Lehrmitteln und in der Unterhaltungsindustrie eingesetzt werden.

Zum Beispiel von der Quelle https://www.amazon.co.uk/Nene-Toys-Fluorescent-Creativity-Invisible/dp/B088R5LRC3 sind Leuchtstoff-Zeichentafeln bekannt, deren Funktionsprinzip auf der Anregung des Leuchtstoffs mit einem dünnen Lichtstift beruht, um eine leuchtende Zeichnung zu erzeugen. Die Zeichnung wird auf der Leuchtstofftafel für einen Zeitraum gespeichert, der durch die Nachleuchtdauer bestimmt wird.

Eine weitere technische Nutzung einer Leuchtstoffbeschichtung im Bereich Bildung und Unterhaltung wird im Kindermuseum in Los Angeles und New Orleans vorgestellt (siehe Quelle https://www.youtube.com/watch?v=KLNIqkLYdqA). Die Lösung ist für den Einsatz als Bildungsexponat konzipiert und besteht aus einer leuchtstoffbeschichteten Wand in drei Abschnitten und einem Blitzgerät, das durch eine zeitverzögerte Steuertaste aktiviert wird. Das Exponat soll Kindern das Phänomen der Lumineszenz vor Augen führen und Bilder in Form von Schatten, insbesondere menschliche Silhouetten auf Leuchtstoffoberflächen, einfangen.

Aus einer Videoveröffentlichung im Internet "Mark Rober, GLOWING WALL DIY- EASY and AWESOME" (siehe https://www.youtube.com/watch?v=I6IqoSAtjb0), ist eine Spielwand für Kinder bekannt, deren Idee im Wesentlichen eine Zusammenstellung der oben genannten Lösungen ist. Laut der Videoveröffentlichung verwendet die technische Lösung eine Fläche, die mit einer Leuchtstoffbeschichtung versehen ist. Für die Erstellung eines Bildes wird ein professioneller Blitz Fovitec StudioPRO SD-400 verwendet, der über das Bedienfeld auf der Rückseite des Blitzes gesteuert wird. Die Möglichkeit, mit einem blauen Laser oder einer ultravioletten Lampe auf die Wand zu malen, wurde als Element des Spielszenarios hinzugefügt, so dass die auf der Wand erzeugten Schatten anschließend beleuchtet werden können, wobei zusätzliche Bilddetails erzeugt werden. Die Spielszenarien können durch die Verwendung von Schablonen ergänzt werden, die es ermöglichen, zusätzlich zu den Schatten der Kinder weitere Schatten in der Szene in interessanten Formen zu erzeugen - Waffen, Tiere, Pflanzen und mehr. Im Vergleich zur oben erwähnten Lösung im Kindermuseum ermöglicht dies die Schaffung und Diversifizierung von Spielszenarien in diesem Raum.

Die oben beschriebene technische Lösung der Spielwand hat jedoch Nachteile in Bezug auf die Sicherheit der Benutzer, d. h. der spielenden Kinder, und die Benutzerfreundlichkeit. Erstens, da der Blitz auf einem freistehenden Stativ steht und das Stromkabel des Blitzes auf dem Boden des abgedunkelten Raumes verläuft, können Kinder über das Kabel stolpern und sich verletzen oder den Blitz durch Herunterfallen beschädigen. Daher ist es zwingend erforderlich, dass ein Sicherheitsbeauftragter in einem solchen Raum mit spielenden Kindern anwesend ist. Zweitens gibt es viele Tasten auf dem Bedienfeld des Blitzes, und es ist für eine ungeübte Person ziemlich schwierig, es zu bedienen. Ein weiteres Problem ist die Bewegung in einem abgedunkelten Raum, die für Kinder ebenfalls unsicher ist.

Außerdem sind die Schablonen, die in "Mark Rober, *GLOWING WALL DIY- EASYand* AWESOME" verwendet werden, aus Papier, so dass sie nicht in einem allgemein genutzten Spielraum verwendet werden können. Papierschablonen können nicht an der Wand befestigt werden und müssen in der Hand gehalten oder an die Wand geklebt werden.

Die Druckschrift WO 2017/029063 A1 beschreibt einen Beleuchtungscontroller zur Steuerung der Beleuchtung, die von einer oder mehreren Leuchten abgegeben wird, die einer Tafel oder Karte beiliegen. Der Beleuchtungscontroller greift auf eine Reihe von Beleuchtungsregeln zu und legt einen jeweiligen Beleuchtungseffekt fest, der jedem von mehreren jeweiligen Spielereignissen zugeordnet ist, die innerhalb des Spiels auftreten können, und empfängt Eingabesignale von einem Eingabegerät, die das Auftreten jedes einer Vielzahl von Spielereignissen identifizieren. Darauf basierend steuert die Beleuchtungssteuerung die Beleuchtung, um beim Auftreten jedes der mehreren Spielereignisse den jeweiligen Lichteffekt zu erzeugen. Der Beleuchtungscontroller ist außerdem so konfiguriert, dass er einen Status des Spiels verfolgt, wobei der Status von der Historie des Spiels abhängt. wobei es sich bei einem oder mehreren der Ereignisse um zustandsabhängige Ereignisse handelt, die zumindest teilweise auf der Grundlage des Spielzustands definiert sind, wobei der Regelsatz einen jeweiligen Lichteffekt für jedes der zustandsabhängigen Ereignisse angibt.

Es besteht aktuell also ein Bedarf an einer technischen Lösung für ein Spielzimmer oder einen Spielraum mit einer Leuchtstoffwand, in dem Kinder selbstständig und sicher spielen können, während sie die Silhouetten ihrer Schatten ohne zusätzlichen technischen Aufwand erhalten.

### KURZE BESCHREIBUNG DER ERFINDUNG

Die vorliegende Erfindung bezieht sich auf ein Spielraumsystem gemäß Anspruch 1 und ein Verfahren zum Betreiben des Spielraumsystems gemäß Anspruch 14. Das System besteht aus einem abdunkelbaren Raum, der durch Wände, einen Boden und eine Decke begrenzt ist. Der besagte Raum wird als Spielraum genutzt.

Mindestens ein Teil mindestens einer Wand des Raums ist mit einer Leuchtstoffbeschichtung versehen. Die Leuchtstoffbeschichtung ist so ausgeführt, dass sie durch Licht im sichtbaren und/oder ultravioletten Bereich angeregt wird.

Darüber hinaus umfasst das System eine gepulste Weitwinkel-Lichtquelle, die an oder in einer anderen Wand gegenüber der mit Leuchtstoff beschichteten Wand oder der Decke des Spielraums oder an einem benutzersicheren Ort innerhalb des Raums befestigt und zumindest auf die mit Leuchtstoff beschichtete Oberfläche gerichtet ist.

In einer Ausführungsform des Spielraumsystems ist die gepulste Weitwinkel-Lichtquelle in Form eines Fotoblitzes ausgeführt. In einer anderen Ausführungsform basiert die gepulste Weitwinkel-Lichtquelle auf einer ultravioletten LED. Strahlung im ultravioletten Bereich ermöglicht eine effektive Anregung des Leuchtstoffs, ohne die Augen des Benutzers zu blenden.

Darüber hinaus umfasst das Spielraumsystem mindestens eine Schablone, die an einer leuchtstoffbeschichteten Wandoberfläche befestigt werden kann.

In einer Ausführungsform hat die mindestens eine leuchtstoffbeschichtete Wand eine Basis, eine Schicht aus ferromagnetischem Material und eine Schicht aus Leuchtstoff. Mindestens eine dieser Wände ist eine Arbeitswand. Die ferromagnetische Schicht ermöglicht es, die mindestens eine mit einem Magneten versehene Schablone dauerhaft an der Arbeitswand zu befestigen.

In diesem Fall enthält die mindestens eine Schablone mindestens einen Magneten, um sie dauerhaft an der Magnetschicht der mindestens einen leuchtstoffbeschichteten Wand zu befestigen. Eine solche lösbare Befestigung der Schablone an der Arbeitswand verhindert eine Beschädigung der Leuchtstoffbeschichtung und ermöglicht ein wiederholtes Verschieben der Schablone auf der Arbeitswand während der Spielsitzung.

Außerdem verfügt das Spielraumsystem über eine Bereitschaftsbeleuchtung, die es dem Benutzer ermöglicht, sich in einem abgedunkelten Spielraum sicher zu bewegen. Verschiedene Phasen einer Spielsitzung können unterschiedliche Beleuchtungsstärken im Spielraum erfordern. Zum Beispiel sollte die Beleuchtung des Spielraums am Ende der Spielzeit ausreichend sein, damit die Benutzer in Ruhe ihre Sachen einsammeln und den Spielraum sicher verlassen können, ohne etwas zu vergessen. Zu Beginn des Spiels sollte die Beleuchtung des Spielraums so sein, dass die Benutzer, die aus einem hell erleuchteten Bereich kommen, die Möglichkeit haben, sich an die Dunkelheit zu gewöhnen, wenn sie den dunklen Raum betreten.

Außerdem umfasst das Spielraumsystem ein Spielraumsteuerungssystem.

In einer Ausführungsform umfasst das Spielraumsteuerungssystem ein zentrales Steuerungsgerät und ein Bedienfeld sowie eine Taste zum Aktivieren der Lichtquelle, die mit dem Bedienfeld verbunden ist.

Das zentrale Steuerungsgerät ist mit einem administrativen Bedienfeld für den Spielraum ausgestattet. Mit Hilfe des administrativen Bedienfeldes stellt der Betreiber des Spielraums die grundlegenden Parameter des Funktionierens des Spielraums, das Betriebsregime der Lichtquelle ein und gibt Spielszenarien ein. Die Spielszenarien können sich sowohl an Kinder als auch an Erwachsene richten. Im Zusammenhang mit der vorliegenden Anwendung bezeichnet der Begriff "Betreiber" einen Angestellten des Spielraums, der Zugang zu allen Elementen des Spielraums und Administratorrechte hat, um die Funktionsweise aller Komponenten des Spielraums festzulegen. Die Anwesenheit des Betreibers im Spielraum während der Spielsitzung ist nicht verpflichtend. So bietet das administrative Bedienfeld dem Betreiber des Spielraums die volle Kontrolle über alle Funktionen und Betriebsparameter des Spielraums.

In einer Ausführungsform des Spielraumsystems ist das administrative Bedienfeld des Spielraums mit der Fähigkeit ausgestattet, die Abkühlzeit der Lichtquelle und die Regenerationszeit der Leuchtstoffbeschichtung einzustellen. Im Zusammenhang mit der vorliegenden Anmeldung bezieht sich der Begriff "Regeneration" auf den zeitabhängigen Prozess der Verringerung der Lichtstärke der Leuchtstoffbeschichtung nach der Beleuchtung durch die Lichtquelle. Die vollständige Regeneration entspricht dem Fall, dass die Lichtstärke der Leuchtstoffbeschichtung die durch die allgemeine Raumbeleuchtung verursachte Hintergrundlichtstärke nicht überschreitet. Die Zeit für die Abkühlung der Lichtquelle und/oder die Regeneration der Leuchtstoffbeschichtung bestimmt den erforderlichen Mindestzeitabstand zwischen zwei aufeinanderfolgenden Aktivierungen der Lichtquelle. Das bedeutet, dass die anschließende Aktivierung der Lichtquelle erst dann erfolgt, wenn sich die Leuchtstoffbeschichtung der Arbeitswand ausreichend regeneriert hat, um ein kontrastreiches Bild zu erzeugen, und die Lichtquelle auf eine vordefinierte Temperatur abgekühlt ist.

Das operative Bedienfeld, das für die Verbindung mit dem zentralen Steuerungsgerät ausgelegt ist, befindet sich im Spielraum und wird vom Benutzer während der Spielsitzung zur direkten Steuerung des Spielablaufs, insbesondere zur Steuerung der Aktivierung der Lichtquelle, verwendet. Mit dem operativen Bedienfeld löst der Benutzer die sofortige Aktivierung der Lichtquelle oder einen Countdown-Timer aus, um die Lichtquelle mit einer eingestellten Zeitverzögerung zu aktivieren. Der Benutzer kann auch das Bedienfeld verwenden, um ein Spielszenario aus einer Liste von vorgeschlagenen Spielszenarien auszuwählen. Im Zusammenhang mit der vorliegenden Anwendung bezeichnet der Begriff "Benutzer" einen Benutzer eines Spielraums, der während einer Spielsitzung Zugang zum Spielraum hat. Im Gegensatz zum Betreiber hat der Benutzer nur begrenzte Rechte zur Steuerung des Spielraums. Insbesondere darf der Benutzer die Parameter, die sich auf den Betriebsmodus der Spielelemente beziehen, nicht ändern. Während einer Spielsitzung hat der Benutzer Zugriff auf das Bedienfeld des Spielraums.

In einer Ausführungsform des Spielraumsystems ist das operative Bedienfeld mit der Fähigkeit ausgestattet, die Lichtquelle sofort zu aktivieren oder einen Countdown-Timer zu aktivieren, bis die Lichtquelle aktiviert wird. Die Möglichkeit, einen Modus für die Aktivierung der Lichtquelle auszuwählen, verhindert eine vorzeitige Aktivierung der Lichtquelle und bringt Abwechslung ins Spiel.

Zu den Varianten des operativen Bedienfeldes gehört mindestens eine der folgenden:
- mindestens eine feste Taste zum Aktivieren der gepulsten Lichtquelle, die an oder in der Wand des Spielraums oder an einer benutzersicheren Stelle im Raum befestigt ist,
- mindestens ein fest installiertes Touchscreen-Bedienfeld, das im Spielraum aufgestellt ist,
- mindestens eine Fernsteuerungseinheit, die so ausgeführt ist, dass sie drahtlos mit dem zentralen Steuerungsgerät in Verbindung steht.

Die Ausführung des operativen Bedienfeldes als stationäres und ferngesteuertes Gerät ermöglicht es, mit dem stationären Gerät nicht nur statische Szenen des Spielverlaufs darzustellen, sondern mit dem ferngesteuerten Gerät auch eine Momentaufnahme des dynamischen Verlaufs auf der Arbeitswand zu erfassen.

In einer Ausführungsform ist das operative Bedienfeld eine Taste zum Aktivieren einer gepulsten Lichtquelle.

In einer anderen Ausführungsform kann das Mobilgerät des Benutzers als operatives Bedienfeld verwendet werden, und die Taste zum Aktivieren der Lichtquelle befindet sich entweder in Form einer Mobilgerätetaste oder auf dem Display des Mobilgeräts in der jeweiligen Anwendung. Die Verwendung eines mobilen Geräts als Bedienelement ist besonders praktisch. Die Steuerung erfolgt entweder über eine Web-Anwendung oder eine Mobilanwendung, die installiert werden kann. Die Funktion des operativen Bedienfeldes beschränkt sich in diesem Fall nicht auf die Aktivierung der Lichtquelle. Die auf dem mobilen Gerät installierte Anwendung ermöglicht es zum Beispiel, Änderungen am Spielszenario direkt während der Spielsitzung vorzunehmen.

In einer Ausführungsform enthält die Fernsteuerung zusätzlich eine eng gebündelte Lichtquelle, um lokale Bereiche der Leuchtstoffoberfläche mit Licht anzuregen.

In einer weiteren Ausführungsform umfasst das Spielraumsystem eine Erkennungseinheit für die Fernsteuerung. Die Verwendung der Erkennungseinheit erleichtert das Auffinden der Fernsteuerung in einem abgedunkelten Spielraum, falls der Benutzer die Fernsteuerung fallen gelassen hat.

In einer weiteren Ausführungsform des Spielraumsystems umfasst das Spielraumsteuerungssystem außerdem einen Countdown-Timer. Die Verwendung des Countdown-Timers ermöglicht es dem Benutzer, genau vorherzusehen, wann die Lichtquelle während des Spiels aktiviert wird, um z. B. rechtzeitig hochzuspringen.

In einer weiteren Ausführungsform des Spielraumsystems umfasst das Spielraumsteuerungssystem ferner eine Spielraum-Zugangskontrolleinheit zur Kontrolle des Zugangs zum Spielraum während der Verwendung der Leuchtstoffbeschichtung. Die Zugangskontrolleinheit ist mit der Möglichkeit des Anschlusses an ein zentrales Steuerungsgerät ausgeführt. Dies ist notwendig, um eine unerwünschte Beleuchtung der Arbeitswand zu verhindern, wenn die Tür zum Spielraum während des Spielens geöffnet wird. Die Zugangskontrolleinheit verhindert auch, dass Unbefugte vor oder während des Spiels das Spielfeld betreten.

In einer weiteren Ausführungsform umfasst das Spielraumsystem zusätzlich eine Foto- und/oder Videokamera zum Aufnehmen der Spielsitzung.

In einer Ausführungsform umfasst das Spielraumsystem außerdem mindestens eine Spielinformationsanzeigeeinrichtung, die sich in dem Spielraum befindet. Die Anzeigeeinrichtung ist mit einem zentralen Steuerungsgerät verbunden und hat die Form von mindestens einem Display. Das mindestens eine Display zeigt mindestens eines der folgenden Elemente an: Spielanweisungen, Anzeigen des Countdown-Timers, eines Spielzeitzählers und einer Mindestzeit, die vergehen muss, bevor die Lichtquelle wieder aktiviert wird; diese wird durch die Abkühlzeit der Lichtquelle und/oder die Regenerationszeit der Leuchtstoffbeschichtung bestimmt. Die funktionelle Verbindung der Spielinformationsanzeigeeinrichtung mit dem zentralen Steuerungsgerät ermöglicht es, den Benutzer in Echtzeit über alle Einzelheiten des Spielverlaufs zu informieren.

In einer Ausführungsform ist das Spielraumsystem zusätzlich mit einem Audiogerät zur akustischen Unterstützung während der Nutzung des Spielraums ausgestattet. Das Audiogerät enthält mindestens einen Lautsprecher. Mit Hilfe des Audiogeräts wird der Spielverlauf von Soundeffekten begleitet. Darüber hinaus erhält der Benutzer während der Spielsitzung Audiobefehle, die dem Spielszenario entsprechen.

In einer Ausführungsform des Spielraums befinden sich die gepulste Weitwinkel-Lichtquelle, das zentrale Steuerungsgerät, die Bereitschaftsbeleuchtung, der Countdown-Timer, das Display und die Verbindungsleitungen zwischen ihnen an Orten, die für den Benutzer nicht direkt zugänglich sind. Das bedeutet, dass der Benutzer oder eine Gruppe von Benutzern während einer Spielsitzung in einem abgedunkelten Spielraum nicht versehentlich über Systemkomponenten stolpern und an ihnen hängen bleiben kann. Dies gewährleistet die Sicherheit der Benutzer während der Spielsitzung und verhindert außerdem, dass Komponenten des Spielraumsystems versehentlich beschädigt werden.

In einer Ausführungsform der Erfindung ist das zentrale Steuerungsgerät mit dem Internet verbindbar. Insbesondere ist das zentrale Steuerungsgerät in der Lage, eine Verbindung zu einem Server herzustellen, der als zentraler Host einer vernetzten oder cloudbasierten Konfiguration fungiert. In einer Ausführungsform der Erfindung umfasst die Netzwerkkonfiguration mehrere Spielräume mit entsprechenden zentralen Steuerungsgeräten. Jedes der zentralen Steuerungsgeräte ist dabei für die Verbindung mit einem Server ausgelegt. Der zentrale Raumregler kommuniziert mit dem Server sowie mit der Web- oder Mobilanwendung, die auf dem Mobilgerät des Benutzers installiert ist.

Der Server ist so ausgeführt, dass er folgende Möglichkeiten bietet:
- Vornahme von Raumbuchungen durch den Benutzer über die Webanwendung,
- Übermittlung der Buchungsinformationen der Spielsitzung an die zentrale Raumsteuerung, um sowohl den physischen Zugang zum Raum als auch die Möglichkeit der Steuerung des Raums durch den Benutzer über die Bedienelemente im Raum zu ermöglichen,
- Gewährung oder Verweigerung des Zugangs zur Steuerung des Raums über eine Web- oder Mobilanwendung, um eine Spielsitzung zu erstellen, wobei die Raumsteuerung nur innerhalb der Spielsitzung möglich ist,
- Übertragung von Echtzeitbefehlen zur Steuerung der gepulsten Lichtquelle sowie Spielszenarien von der Mobilanwendung innerhalb einer Spielsitzung an die zentrale Spielraumsteuerung,
- Bereitstellung der Möglichkeit für den Benutzer, Bilder seiner Spielsitzung von der zentralen Raumsteuerung abzurufen.

Darüber hinaus umfasst die vorliegende Erfindung ein Verfahren zum Betrieb des oben beschriebenen Spielraumsystems. Das Verfahren umfasst mindestens die folgenden Schritte:
- Registrierung und Gewährung des Zugangs für einen Benutzer,
- Bereitstellung erster Spielinformationen für den Benutzer,
- Befestigung von mindestens einer Schablone auf der Leuchtstoffbeschichtung von mindestens einer Wand des Spielraums,
- Steuerung der Aktivierung der gepulsten Lichtquelle über ein operatives Bedienfeld,
- Anregung der Leuchtstoffbeschichtung mit einer gepulsten Weitwinkel-Lichtquelle,
- Bereitstellung aktueller Spielinformationen für den Benutzer während einer Spielsitzung,
- Verwendung von Bereitschaftsbeleuchtung während einer Spielsitzung und Deckenbeleuchtung zwischen den Spielsitzungen.

### KURZBESCHREIBUNG DER FIGUREN

Die Merkmale des beanspruchten Spielraumsystems sind in den beigefügten Figuren dargestellt, wobei:
FIG. 1 eine beispielhafte Anordnung von Komponenten des Spielraumsystems zeigt;
FIG. 2 eine Querschnittsansicht einer Spielraumwand, die mit einer Leuchtstoffbeschichtung und einer an der Wand befestigten Schablone versehen ist, zeigt;
FIG. 3 eine weitere Ausführungsform einer Spielraumeinrichtung zeigt;
FIG. 4 eine Ausführungsform einer Netzwerkkonfiguration mit mehreren Spielräumen und einem zentralen Server zeigt.

### DETAILLIERTE BESCHREIBUNG DER ERFINDUNG

Weitere Ziele, Merkmale und Vorteile der vorliegenden Erfindung ergeben sich aus der folgenden detaillierten Beschreibung der Erfindung unter Bezugnahme auf die beigefügten Figuren, wie oben angegeben. Wie dem Fachmann klar sein wird, hat die vorliegende Erfindung verschiedene Modifikationen und alternative Formen. Die in den Zeichnungen beispielhaft dargestellten charakteristischen Merkmale werden jedoch im Einzelnen beschrieben. Es versteht sich, dass die nachstehend beschriebenen konkreten Ausführungsformen der vorliegenden Erfindung nicht alle möglichen Ausführungsformen der Erfindung beschränken, sondern vielmehr als Darstellung für ein besseres Verständnis der Erfindung durch den Fachmann dienen.

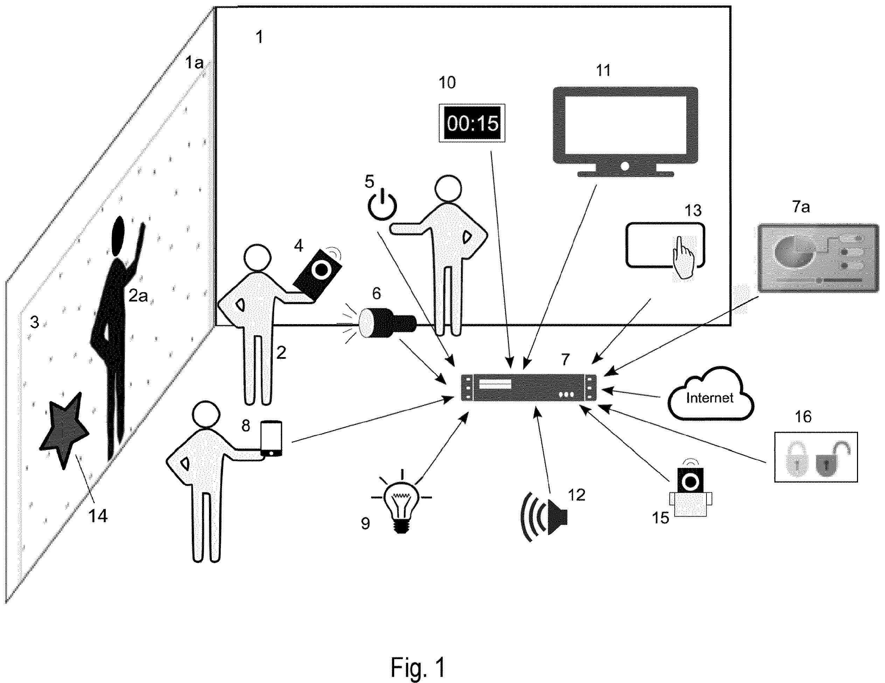

FIG. 1 zeigt die folgenden Komponenten des Spielraumsystems gemäß der vorliegenden Erfindung: eine der Wände 1 des Spielraums sowie die Arbeitswand 1a mit der Leuchtstoffbeschichtung 3, den Benutzer 2 und die Schattensilhouette 2a des Benutzers, das operative Bedienfeld in verschiedenen Modifikationen 4, 5, 8, 13, die gepulste Weitwinkel-Lichtquelle 6, das zentrale Steuerungsgerät 7 mit Internetverbindung und das administrative Bedienfeld 7a, die Bereitschaftsbeleuchtung 9, den Countdown-Timer 10, das Display 11 als Mittel zur Anzeige von Spielinformationen, das Audiogerät 12, die Schablone 14, die Erkennungseinheit der Fernsteuerung 15.

Darüber hinaus ist das Spielraumsystem mit einer Spielraum-Zugangskontrolleinheit 16 ausgestattet. Das Spielraumsystem enthält zusätzlich eine Foto- und/oder Videokamera (in FIG. 1 nicht dargestellt), um den Spielablauf zu filmen. FIG. 1 zeigt mögliche Elemente des Spielraums. Die gegenseitige Anordnung der Elemente ist relativ und kann ohne Beeinträchtigung der Funktionalität des Spielraums variieren. Die Kombination der Elemente des Spielraums miteinander wird durch die Kombination der in den Ansprüchen enthaltenen Merkmale bestimmt.

Im Folgenden ist eine detaillierte Beschreibung aller Komponenten des Spielraumsystems zu finden.

### Spielraum

Der Spielraum ist durch einen Raum definiert, der durch Wände 1, 1a (siehe FIG. 1), einen Boden und eine Decke begrenzt ist und abgedunkelt werden kann. Beispielsweise kann der Spielraum fensterlos sein, oder mindestens ein Fenster des Spielraums ist mit dichten Vorhängen versehen, die kein Licht hereinlassen. FIG. 1 zeigt nur zwei Wände, um die Komponenten im Inneren des Spielraums zu zeigen. Dem Fachmann ist jedoch klar, dass der Spielraum zur Erreichung einer optimalen Funktionalität vollständig von Wänden umgeben ist, die einen geschlossenen Raum bilden.

Eine der Wände des Raumes ist eine Arbeitswand 1a, die mit einer Leuchtstoffbeschichtung 3 versehen ist. Die Leuchtstoffbeschichtung 3 bedeckt nur einen Teil der Arbeitswand 1a, alternativ die gesamte Arbeitswand 1a. In einer anderen Ausführungsform können mehrere Wände des Spielraums als Arbeitswände ausgeführt sein, d. h. mit der Leuchtstoffbeschichtung versehen sein.

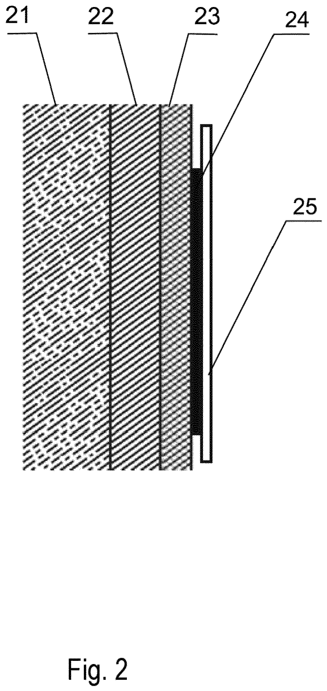

In einer Ausführungsform hat die Arbeitswand 1a eine Struktur, wie in FIG. 2 dargestellt. In diesem Fall besteht die Arbeitswand 1a aus einer Trägerfläche 21, einer Schicht 22 aus ferromagnetischem Material und einer Leuchtstoffbeschichtung 23. Auf der Trägerfläche 21 ist eine Schicht 22 aus ferromagnetischem Material aufgebracht. Die Schicht 22 aus ferromagnetischem Material kann in Form eines Blechs oder eines verstärkenden Metallgitters mit ferromagnetischen Eigenschaften ausgeführt sein. Auf der Schicht aus ferromagnetischem Material 22 befindet sich eine Leuchtstoffbeschichtung 23.

In einer besonderen Ausführung können industriell hergestellte fluoreszierende Folien als Leuchtstoffbeschichtung 3, 23 verwendet werden (siehe Figuren 1 und 2). In einer Ausführungsform wird eine fluoreszierende Folie verwendet, bei der der aktive Bestandteil, d. h. der Leuchtstoff, Strontiumaluminat ist.

In einer weiteren Ausführungsform kann die Arbeitswand 1a ganz oder teilweise mit einer Farbe beschichtet sein, die fluoreszierende Pigmente enthält. Solche Pigmente sind in der Lage, Energie aus einer natürlichen oder künstlichen Lichtquelle zu absorbieren und sie in Form eines für das Auge sichtbaren Leuchtens im Dunkeln abzugeben. Die Lichtquelle emittiert dabei Licht, zumindest im sichtbaren und/oder ultravioletten Bereich. Lumineszierende Pigmente haben die unbegrenzte Möglichkeit, ihre Leuchtfunktion zu erneuern. Fluoreszierende Pigmente oder Leuchtstoffe werden je nach ihrer chemischen Beschaffenheit in anorganische und organische eingeteilt. Von den anorganischen Leuchtstoffen sind die bekanntesten Sulfide, Selenide, Aluminate und Kristallleuchtstoffe.

### Gepulste Lichtquelle

Außerdem enthält das Spielraumsystem eine gepulste Weitwinkel-Lichtquelle 6 mit Emission im sichtbaren und/oder ultravioletten Bereich. Mit dieser Lichtquelle lassen sich bei der Beleuchtung der Leuchtstoffbeschichtung 3 deutliche Schatten erzeugen. Die gepulste Weitwinkel-Lichtquelle 6 ist an der Wand oder in der Wand gegenüber der Arbeitswand 1a befestigt. In einer anderen Ausführungsform wird die Lichtquelle 6 an der Decke des Spielraums oder an einem benutzersicheren Ort im Raum befestigt. Obwohl die emittierende Oberfläche der Lichtquelle endliche lineare Abmessungen hat, was die Abmessungen der Arbeitswand 1a und den Abstand vom Befestigungsort der Lichtquelle 6 zur Arbeitswand 1a betrifft, ist die Lichtquelle 6 eine Punktquelle, um eine deutlich sichtbare Begrenzung der Schattensilhouette 2a des Benutzers 2 auf der durch die Lichtquelle 6 angeregten Leuchtstoffbeschichtung 3 zu schaffen. Dabei wird die Winkelgröße der Strahlung der Lichtquelle 6, also die Winkelgröße des Strahlungsdiagramms, so gewählt, dass der Bereich der Arbeitswand 1a mit der Leuchtstoffbeschichtung 3 gleichmäßig und vollständig beleuchtet wird. In einer Ausführungsform ist die Weitwinkel-Lichtquelle 6 ein Fotoblitz.

In einer besonderen Ausführungsform ist die gepulste Lichtquelle in Form einer ultravioletten (UV) LED ausgeführt, die mit einer Stromversorgungseinheit versehen ist. Die UV-Strahlung im Wellenlängenbereich von 410-415 nm regt den Leuchtstoff, z. B. Strontiumaluminat, wirksam an, blendet aber im Gegensatz zu einem herkömmlichen Blitzlicht im sichtbaren Wellenlängenbereich nicht die Augen der Benutzer und ist nicht gesundheitsschädlich.

### Schablone

Darüber hinaus umfasst das Spielraumsystem mindestens eine Schablone 14, 25, die auf der Leuchtstoffbeschichtung 3, 23 befestigt ist (siehe FIG. 1 und 2). Die mindestens eine Schablone 14, deren Oberfläche nicht lumineszierend ist, wird verwendet, um einen Bereich der Leuchtstoffbeschichtung 3 zu erzeugen, der vor dem Anregungslicht geschützt ist. Die von der Schablone 14 abgeschirmten Bereiche der Leuchtstoffbeschichtung 3 und damit die Oberfläche der Schablone 14 werden nicht angeregt und heben sich als dunkle Bereiche von der umgebenden leuchtenden Fläche ab. Bei Bedarf können sie später, nach dem Ablösen der Schablone 14 von der Wand, mit einer eng gebündelten Lichtquelle angeregt werden. Die Beleuchtung der Arbeitswand 1a durch die Lichtquelle 6 hinterlässt eine dunkle Silhouette auf der Arbeitswand 1a, die die Form der Schablone wiederholt.

In einer weiteren Ausführungsform ist die der Lichtquelle zugewandte Oberfläche der Schablone 14 die Arbeitsfläche der Schablone und enthält eine Leuchtstoffbeschichtung, die die gleiche oder eine andere Zusammensetzung als die Leuchtstoffbeschichtung der Arbeitswand haben kann. Unterscheidet sich die Leuchtstoffbeschichtung der Schablone von der Leuchtstoffbeschichtung der Arbeitswand, so hat das Leuchtstoffglühen der Schablone eine andere Farbe und/oder Lumineszenzintensität als das Glühen der Arbeitswand als Ergebnis der Beleuchtung. Schablonen können als Silhouetten von Haustieren, Pflanzen, Haushaltsgegenständen, Waffen, Lieblingsfiguren und anderen Gegenständen angefertigt werden. Da es notwendig ist, mehrere Schablonen gleichzeitig zu verwenden, um komplexere Kompositionen zu erstellen, ist es sehr wichtig, dass sie leicht und sicher an der Leuchtstoffoberfläche befestigt werden können. Dies wird durch einen Magneten erreicht, der an der Oberfläche der Schablone gegenüber der Arbeitsfläche befestigt ist.

Ein wichtiger Aspekt, der die vorliegende Erfindung von den Lösungen des Standes der Technik unterscheidet, ist die Gestaltung der Schablonen und der Arbeitswand, die es ermöglicht, die Schablonen an der Arbeitswand zu befestigen und so eine einfache und sichere Anwendung zu gewährleisten. Was die Sicherheit betrifft, so müssen sie weich und leicht, aber mechanisch stabil sein.

In einer Ausführungsform (siehe auch FIG. 2) besteht mindestens eine Schablone 25 aus Polyurethanschaum oder einem ähnlichen weichen Material, um sie weich und sicher zu machen. Mindestens ein Magnet 24 ist an der Oberfläche der Schablone 25 gegenüber der Arbeitsfläche der Schablone befestigt. In einer anderen Ausführungsform befindet sich der mindestens eine Magnet 24 im Inneren der Schablone 25. Der mindestens eine Magnet 24 kann ein Magnetband sein. So lässt sich die Schablone bequem und schnell an der Oberfläche der Arbeitswand 1a befestigen, die magnetische Eigenschaften hat, so dass der Benutzer die Schablone nicht mehr in den Händen halten muss. Die Arbeitsfläche der Schablonen kann mit einer andersfarbigen Leuchtstoffbeschichtung versehen werden, wodurch interessantere Szenen möglich werden. In einer anderen Ausführungsform wird die Arbeitsfläche der Schablone ohne Leuchtstoffbeschichtung hergestellt.

In einer anderen Ausführungsform besteht die mindestens eine Schablone 14 aus einer Kunststofffolie, die durch elektrostatische Anziehung auf der Oberfläche der Wand 1a mit der Leuchtstoffbeschichtung 3 gehalten wird. In einer besonderen Ausführungsform kann eine Folie von Esquoia (siehe https://esquoia.com/product/dry-erase-whiteboard-rolls-selfcling/) zur Herstellung mindestens einer Schablone 14 verwendet werden.

### Spielraumsteuerungssystem

Der Spielraum wird über ein Spielraumsteuerungssystem gesteuert. Das Steuerungssystem umfasst ein zentrales Steuerungsgerät 7 mit einem administrativen Bedienfeld 7a und einem operativen Bedienfeld 4, 5, 8, 13. Das zentrale Steuerungsgerät ist funktionell mit der Spielinformationsanzeigeeinrichtung 11 verbunden. Darüber hinaus umfasst das Steuerungssystem eine Spielraum-Zugangskontrolleinheit 16, um zu verhindern, dass Unbefugte die Spielsitzung betreten. Darüber hinaus verhindert die Zugangskontrolleinheit 16 eine unerwünschte Beleuchtung der Arbeitswand durch das Öffnen der Tür zum Spielraum vor oder während des Spiels.

### Zentrales Steuerungsgerät

Das zentrale Steuerungsgerät 7 ist funktionell mit den Komponenten des Spielraumsystems verbunden und auch mit Internetverbindung vorgesehen. Das zentrale Steuerungsgerät 7 ist mit einem Bedienfeld 7a zur administrativen Steuerung des Spielraums ausgestattet. Das administrative Bedienfeld 7a bietet dem Betreiber des Spielraums die volle Kontrolle über alle Funktionen und Betriebsparameter des Spielraums. In einer Ausführungsform hat das administrative Bedienfeld 7a die Form eines Touchscreens. In einer anderen Ausführungsform hat das administrative Bedienfeld 7a die Form einer Webanwendung, auf die der Betreiber des Spielraums zugreifen kann, die aber für die Benutzer nicht zugänglich ist. In einer weiteren Ausführungsform wird das administrative Bedienfeld als Fernzugriff auf das zentrale Steuerungsgerät 7 über ein SSH-Terminal verwirklicht. Der Betreiber oder ein Angestellter des Spielraums stellt die Parameter für den Betrieb des Spielraums auf dem administrativen Bedienfeld 7a ein. Einer der Betriebsparameter ist insbesondere die Mindestzeit zwischen zwei aufeinander folgenden Aktivierungen der Lichtquelle 3. Die Mindestzeit zwischen zwei aufeinander folgenden Aktivierungen wird durch die charakteristische Regenerationszeit der Leuchtstoffbeschichtung und die Abkühlzeit der gepulsten Lichtquelle bestimmt. Insbesondere muss die Mindestzeit zwischen den Aktivierungen der Lichtquelle länger sein als die Regenerationszeit der Leuchtstoffbeschichtung und/oder die Abkühlzeit der Lichtquelle.

Der zuverlässige und optimale Betrieb des Spielraums wird durch die physikalischen Eigenschaften der Leuchtstoffbeschichtung 3 und der gepulsten Lichtquelle 6 bestimmt. Wenn die Leuchtstoffbeschichtung 3 wiederholt für kurze Zeiträume angeregt wird, werden die Silhouetten 2a der einzelnen Beleuchtungen kontrastarm und schlecht unterscheidbar. Um den erforderlichen Bildkontrast zu erreichen, muss die Leuchtstoffbeschichtung 3 vor dem nächsten Bild ausreichend "abkühlen", d. h. es muss eine gewisse Zeit gewartet werden, bis die Lichtstärke des Leuchtstoffs abnimmt. Es ist nicht notwendig zu warten, bis der Leuchtstoff vollständig "abgekühlt" ist. Die Möglichkeit, ein neues Bild über ein bestehendes Bild zu legen, sorgt für zusätzliche Spielmöglichkeiten. Die erforderliche Verzögerungszeit, die in diesem Patent als "Regenerationszeit" bezeichnet wird, hängt von den physikalischen Eigenschaften und der chemischen Zusammensetzung der konkreten gewählten Leuchtstoffbeschichtung ab. Um kontrastreiche Bilder zu erhalten, blockiert das zentrale Steuerungsgerät 7 die Aktivierung der Lichtquelle 6 für eine Zeit, die mindestens der eingestellten Regenerationszeit der Leuchtstoffbeschichtung entspricht. Die Regenerationszeit wird am administrativen Bedienfeld 7a in Abhängigkeit von der Wahl des Leuchtstofftyps, der Leistung der gepulsten Lichtquelle und anderen Überlegungen eingestellt.

Um einen stabilen Betrieb der Lichtquelle 6 während der gesamten Betriebszeit zu gewährleisten, muss eine übermäßige Überhitzung der gepulsten Lichtquelle 6 vermieden werden. Zu diesem Zweck muss die Zeit zwischen zwei aufeinander folgenden Aktivierungen der Lichtquelle länger sein als die Zeit, die die Lichtquelle benötigt, um auf eine Temperatur abzukühlen, die die angegebene Betriebstemperatur der Lichtquelle nicht überschreitet. Die Abkühlzeit der Lichtquelle wird am Bedienfeld 7a anhand der technischen Daten der Lichtquelle 6 eingestellt. Wie bei der Regenerationszeit des Leuchtstoffs blockiert das zentrale Steuerungsgerät 7 die Aktivierung der Lichtquelle 6 für eine Zeit, die mindestens so lang ist wie die eingestellte Abkühlzeit der Lichtquelle. In der Regel hat die gepulste Weitwinkel-Lichtquelle 6 eine relativ kurze Lebensdauer. Die Anwendung der Abkühlzeit ermöglicht es, die Lebensdauer der Lichtquelle zu verlängern, wobei die optimale Betriebstemperatur der Lichtquelle 6 sichergestellt wird. Die Nutzung der Regenerationszeit der Leuchtstoffbeschichtung 3 ermöglicht es auch, die Lebensdauer der Lichtquelle zu verlängern, wobei die Anzahl der unwirksamen Aktivierungen der Lichtquelle 6, die kein Kontrastbild ergeben, verringert wird.

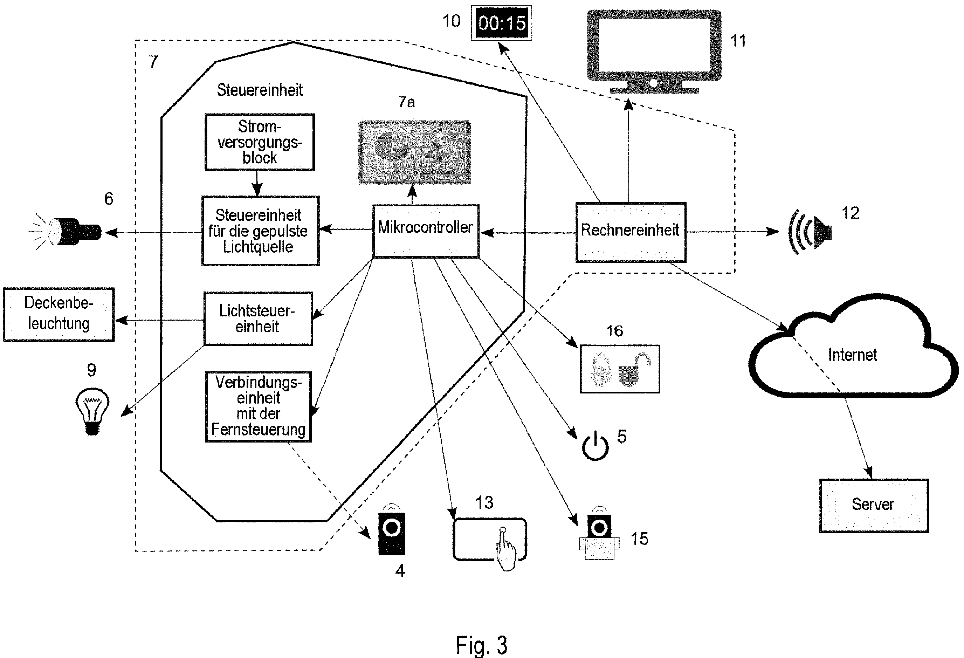

FIG. 3 zeigt eine mögliche Ausführungsform eines Spielraumsystems. In dieser Ausführungsform umfasst das zentrale Steuerungsgerät 7 eine Rechnereinheit und eine Steuerungseinheit, die über einen seriellen USB-Anschluss mit der Rechnereinheit verbunden ist.

Die Rechnereinheit ist funktionell mit einem Countdown-Timer 10, einer Spielinformationsanzeigeeinrichtung 11 und einem Touchscreen-Bedienfeld 13 verbunden.

Die Steuerungseinheit umfasst ein administratives Bedienfeld 7a, einen Mikrocontroller, eine Stromversorgungseinheit, eine Steuerungseinheit für eine gepulste Lichtquelle mit einer daran angeschlossenen Kondensatorbank, eine Einheit zur Steuerung der Beleuchtung und eine Verbindungseinheit mit der Fernsteuerung. In einem besonderen Fall erfolgt die Verbindung mit der Fernsteuerung über ein ZigBee-Modul.

Der Mikrocontroller als zentrale Einheit der Steuerungseinheit ist funktionell mit der Steuerungseinheit der gepulsten Lichtquelle, der Einheit zur Steuerung der Beleuchtung und der Verbindungseinheit mit der Fernsteuerung verbunden. Außerdem ist der Mikrocontroller funktionell mit mindestens einer stationären Taste 5 zum Aktivieren der gepulsten Lichtquelle, mit einer stationären Touchscreen-Steuerungseinheit 13, mit einer Spielraum-Zugangskontrolleinheit 16 und mit einer Erkennungseinheit 15 für die Fernsteuerung verbunden.

Die Steuerungseinheit für die gepulste Lichtquelle 6 führt die Aktivierung der Lichtquelle 6 direkt durch.

Die Einheit zur Steuerung der Beleuchtung ist funktionell mit der Bereitschaftsbeleuchtung 9 sowie mit der Deckenbeleuchtung im Spielraum verbunden.

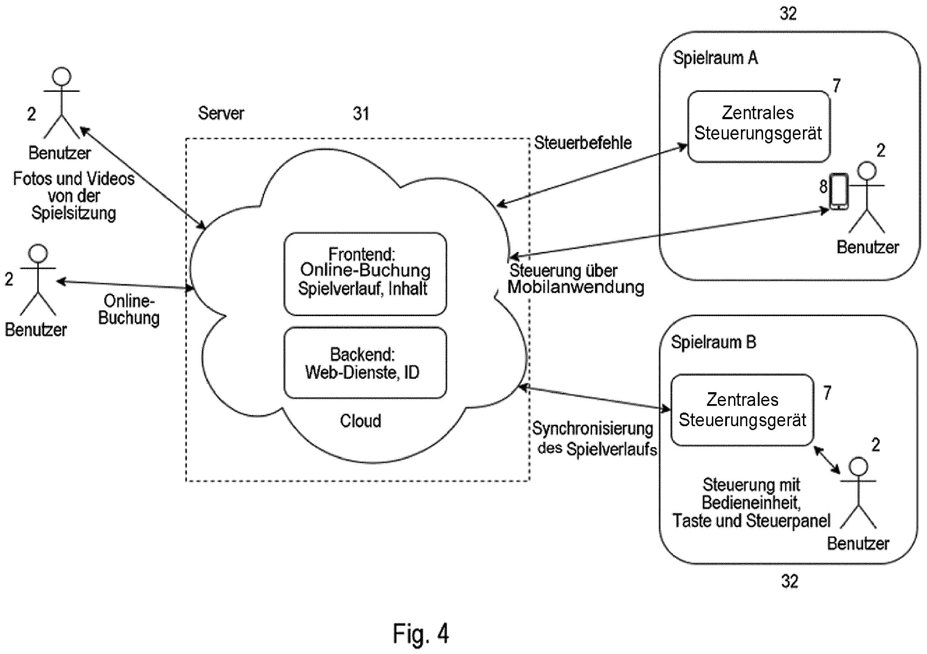

FIG. 4 zeigt eine Netzwerkkonfiguration mit mehreren Spielräumen 32, die jeweils mit einem zentralen Server 31 verbunden sind. Das zentrale Steuerungsgerät 7 jedes Raums ist so ausgeführt, dass es mit dem Internet verbindbar ist. Insbesondere ist das zentrale Steuerungsgerät 7 in der Lage, sich mit dem Server 31 zu verbinden, der als zentraler Knotenpunkt der vernetzten oder cloudbasierten Konfiguration fungiert. Das zentrale Steuerungsgerät 7 mindestens eines Raumes 32 verbindet sich mit dem Server 31 sowie alternativ mit einer Web- oder Mobilanwendung, die auf dem Mobilgerät 8 mindestens eines Benutzers 2 installiert ist.

Der Server 31 ist so ausgeführt, dass er die folgenden Möglichkeiten bietet:
- Vornahme einer Buchung von Räumen 32 durch Benutzer 2 über eine Web- oder Mobilanwendung,
- Übermittlung der Informationen über die Buchung einer Spielsitzung an das zentrale Steuerungsgerät 7 des Raums 32, um sowohl den physischen Zugang zum Raum 32 als auch die Möglichkeit der operativen Steuerung des Raums 32 durch den Benutzer 2 über ein im Raum befindliches operatives Bedienfeld (in FIG. 4 nicht dargestellt) zu ermöglichen,
- Gewährung oder Verweigerung des Zugangs zur Steuerung des Raums 32 über eine Web- oder Mobilanwendung, um eine Spielsitzung zu erstellen, wobei die operative Steuerung des Raums 32 nur innerhalb der Spielsitzung möglich ist,
- Übertragung von Echtzeitbefehlen zur Steuerung der Weitwinkel-Lichtquelle sowie Spielszenarien von der mobilen Anwendung innerhalb der Spielsitzung an das zentrale Steuerungsgerät 7 des Spielraums 32,
- Bereitstellung der Möglichkeit für den Benutzer, Bilder seiner Spielsitzung von dem zentralen Steuerungsgerät 7 des Spielraums 32 abzurufen.

### Operatives Bedienfeld

Um einen Moment einer sich schnell verändernden Spielsituation auf einer Arbeitswand einzufangen, wie z. B. springende Kinder, einen fliegenden Ball oder andere sich bewegende Objekte auf einer Arbeitswand, muss die Aktivierung einer Weitwinkel-Lichtquelle einfach und bequem sein. Die Aktivierung der Lichtquelle wird vom Benutzer über das operative Bedienfeld 4, 5, 8, 13 gesteuert. Das operative Bedienfeld 4, 5, 8, 13 ist mit dem zentralen Steuerungsgerät 7 verbunden und verfügt über eine Taste zum Aktivieren der gepulsten Lichtquelle 6. Über das operative Bedienfeld kann der Benutzer die Lichtquelle sofort aktivieren oder einen Countdown-Timer 10 verwenden, um die Lichtquelle mit einer vorher festgelegten Zeitverzögerung zu aktivieren. Der Benutzer kann auch das operative Bedienfeld verwenden, um ein Spielszenario aus einer Liste von vorgeschlagenen Spielszenarien auszuwählen.

Um verschiedene Methoden zum Aktivieren der Lichtquelle zu verwenden und dem Benutzer die Möglichkeit zu geben, die für die jeweilige Spielsituation am besten geeignete Methode auszuwählen, wird die Lichtquelle 6 durch ein Signal des zentralen Steuerungsgeräts 7 aktiviert. Das heißt, alle Anfragen zum Aktivieren der Lichtquelle 6 werden an das zentrale Steuerungsgerät 7 und nicht direkt an die Lichtquelle gerichtet. Auf Befehl des operativen Bedienfeldes 4, 5, 8, 13 kann die Lichtquelle 6 über das zentrale Steuerungsgerät 7 sofort aktiviert werden. In einer anderen Ausführungsform wird durch Drücken der Aktivierungstaste auf dem operativen Bedienfeld 4, 5, 8, 13 ein Countdown-Timer 10 aktiviert. Wenn die Zeit des Countdown-Timers 10 abgelaufen ist, sendet das zentrale Steuerungsgerät 7 ein Aktivierungssignal an die Lichtquelle 6. In der einfachsten Ausführungsform ist das operative Bedienfeld in Form mindestens einer stationären Taste 5 an der Wand oder in der Wand des Spielraums befestigt, die mit dem zentralen Steuerungsgerät verbunden ist. In einer anderen Ausführungsform befindet sich die stationäre Taste 5 an einem bestimmten Ort, z. B. auf einem Sockel innerhalb des Spielraums an einem für den Benutzer sicheren Ort, so dass die Bewegung des Benutzers innerhalb des abgedunkelten Spielraums nicht behindert wird. In einer weiteren Ausführungsform können mindestens eine stationäre Taste 5 zum sofortigen Aktivieren der Lichtquelle und mindestens eine stationäre Taste 5 zum verzögerten Aktivieren der Lichtquelle gleichzeitig vorhanden sein. Die Dauer des Countdowns kann vom Benutzer über den stationären Touchscreen 13 oder das Mobilgerät 8 eingestellt werden. Im einfachsten Fall kann die Dauer des Countdowns vom Administrator als Systemeinstellung festgelegt werden. Außerdem kann das operative Bedienfeld als stationärer Touchscreen 13 ausgeführt sein, der im Spielraum installiert ist. In diesem Fall wird das markierte Feld auf dem Touchscreen des stationären Touchscreen-Bedienfeldes 13 als Taste zum Aktivieren der Lichtquelle verwendet. Darüber hinaus ermöglicht es das stationäre Touchscreen-Bedienfeld 13 dem Benutzer, Änderungen am Spielszenario direkt während der Spielsitzung vorzunehmen. Das stationäre Touchscreen-Bedienfeld 13 als operatives Bedienfeld bietet zusätzlich mindestens eine der folgenden Funktionen: Steuerung des Zugangs zum Spielraum über die Spielraum-Zugangskontrolleinheit, Steuerung der Lichtquelle 6, Einstellung einer Verzögerungszeit für den Countdown-Timer 10, Steuerung des Spielszenarios, Auswahl der Sprache für die Soundeffekte und die angezeigten Texte während der Spielsitzung und Anzeige der Texte selbst, Aktivierung des Suchmodus der Fernsteuerung 4, Aktivierung der Aufnahme des Spielverlaufs.

In einer anderen Ausführungsform ist das operative Bedienfeld in Form einer Fernsteuerung 4 ausgeführt, die drahtlos mit dem zentralen Steuerungsgerät 7 verbunden ist. In einer besonderen Ausführungsform ist die Fernsteuerung 4 mit einem ZigBee-Modul zur Verbindung mit dem zentralen Steuerungsgerät 7 ausgestattet.

Die Fernsteuerung 4 kann in verschiedenen Formen ausgeführt sein, so dass sie vom Benutzer während des Spiels, z. B. bei einem Sprung, benutzt werden kann. Da der Benutzer die Fernsteuerung 4 während des Spiels fallen lassen oder auf sie treten kann, muss die Fernsteuerung 4 stoßfest sein. Darüber hinaus kann die Fernsteuerung 4 mit einer eng gebündelten Lichtquelle ausgestattet sein. Mit der eng gebündelten Lichtquelle kann der Benutzer durch lokale Beleuchtung der Leuchtstoffbeschichtung ein zusätzliches Bild auf nicht erregte Bereiche der Arbeitswand 1a aufbringen, die durch Schablonen und/oder eine Silhouette des Benutzers verdeckt sind. Darüber hinaus kann das zusätzliche Bild auch auf die bereits erregten Bereiche der Arbeitswand aufgebracht werden.

Da der Benutzer die Fernsteuerung 4 in einem abgedunkelten Spielraum verlieren könnte, kann die Fernsteuerung 4 mit einem Lautsprecher und einer Lichtquelle ausgestattet sein. Im Falle eines Verlustes ist es möglich, ein Signal von dem zentralen Steuerungsgerät 7 an die Fernsteuerung 4 zu senden, um den Lautsprecher und die Lichtquelle zu aktivieren. Das Signal zum Aktivieren des Lautsprechers und der Lichtquelle kann entweder vom Raumbetreiber über das administrative Bedienfeld 7a oder vom Benutzer über das stationäre Touchscreen-Bedienfeld 13 gesendet werden.

In einer weiteren Ausführungsform ist das Spielraumsystem mit einer Fernsteuerungserkennungseinheit 15 ausgestattet, die mit dem zentralen Steuerungsgerät 7 verbunden ist. Die Erkennungseinheit 15 ist im abgedunkelten Spielraum gut sichtbar und verfügt über eine Halterung für die Fernsteuerung 4 und eine Taste zum Aktivieren der Fernsteuerungssuche. Wenn die Fernsteuerung 4 verloren geht, sendet die Erkennungseinheit 15 ein Signal an das zentrale Steuerungsgerät 7, um den Lautsprecher und die Lichtquelle auf der Fernsteuerung 4 zu aktivieren, wenn die Suchaktivierungstaste gedrückt wird.

In einer anderen Ausführungsform ist die Fernsteuerung 4 mit einem Magneten versehen und enthält die Erkennungseinheit 15 einen Hall-Sensor, der auf das Magnetfeld des in der Fernsteuerung 4 befestigten Magneten anspricht. Auf diese Weise erkennt die Erkennungseinheit 15, dass die Fernsteuerung 4 in der Halterung der Erkennungseinheit 15 befestigt ist. Falls die Fernsteuerung 4 am Ende der Spielsitzung nicht in der Halterung der Erkennungseinheit 15 liegt, sendet die Erkennungseinheit 15 ein Signal an das zentrale Steuerungsgerät 7, wodurch der Lautsprecher und die Lichtquelle der Fernsteuerung 4 aktiviert werden. Es ist auch möglich, einen akustischen Aufruf abzuspielen, der den Benutzer auffordert, die Fernsteuerung 4 in die Halterung zu legen, und den entsprechenden Aufruf auf dem Informationsdisplay anzuzeigen.

In einer anderen Ausführungsform kann das operative Bedienfeld als Softwareanwendung für ein mobiles Gerät 8, z. B. ein Smartphone, ausgeführt sein. In diesem Fall ist die Anwendung drahtlos mit dem zentralen Steuerungsgerät 7 verbunden und identifiziert eine der Tasten des Mobilgeräts 8 oder ein hervorgehobenes Feld auf dem Touchscreen des Mobilgeräts 8 als Taste zum Aktivieren der Lichtquelle. Darüber hinaus ermöglicht es die auf dem Mobilgerät 8 installierte Anwendung dem Benutzer, Änderungen am Spielszenario direkt während der Spielsitzung vorzunehmen. Zu den zusätzlichen Funktionen, die das Mobilgerät 8 als operatives Bedienfeld bereitstellt, gehört mindestens einer der folgenden Parameter: Steuerung des Zugangs zum Spielraum über die Spielraum-Zugangskontrolleinheit, Steuerung der Lichtquelle 6, Einstellung der Verzögerungszeit für den Countdown-Timer 10, Steuerung des Spielszenarios, Auswahl der Sprache für die Soundeffekte und die angezeigten Texte während der Spielsitzung und Anzeige der Texte selbst, Abspielen der Spiel-Audio-Nachrichten auf dem Mobilgerät 8, Aktivierung der Suche nach der Fernsteuerung 4, Aktivierung der Aufnahme des Spielverlaufs.

### Einrichtung zur Anzeige von Spielinformationen

Während des gesamten Spiels erhält der Benutzer die auf der Spielinformationsanzeigeeinrichtung 11 angezeigten Informationen. Die Spielinformationsanzeigeeinrichtung 11 kann mindestens ein Display oder eine andere Vorrichtung zur Anzeige von Spielinformationen umfassen. Einige oder alle der auf der Spielinformationsanzeigeeinrichtung 11 angezeigten Informationen können auch auf dem mobilen Gerät 8 angezeigt werden. Die Spielinformationsanzeigeeinrichtung zeigt mindestens einen der unten aufgeführten Parameter an:
- die verbleibende Zeit bis zum Ende des Spiels,
- die verbleibende Mindestzeit bis zur Abkühlung der Lichtquelle 6 und/oder bis zur vollständigen Regeneration der Oberfläche der Leuchtstoffbeschichtung 3,
- ein Countdown-Timer 10, der anzeigt, bis die Lichtquelle 6 aktiviert wird,
- Einzelheiten eines Spielszenarios, z. B. vorgeplante Spiel- oder Wettkampfszenarien, bei denen der Benutzer eine Aufgabe zu erfüllen hat,
- zusätzliche Anweisungen, z. B. die Aufforderung an den Benutzer, die Fernsteuerung 4 am Ende der Spielsitzung in die Halterung der Fernsteuerungserkennungseinheit 15 zu stecken.

Darüber hinaus können die Spielinformationen über das Audiogerät 12 von Soundeffekten und Audiomeldungen begleitet werden. Das Audiogerät 12 umfasst mindestens einen im Spielraum installierten Lautsprecher. Insbesondere kann der Countdown des Countdown-Timers, der auf dem mindestens einen Display angezeigt wird, durch Audiosignale über das Audiogerät 12 dupliziert werden.

### Foto- und/oder Videokamera

Das Spielraumsystem bietet außerdem die Möglichkeit, Fotos oder Videos von interessanten Abschnitten der Spielsitzung zu speichern. Mit dem Einverständnis des Benutzers macht das System mit Hilfe einer im Spielraum installierten Foto- und/oder Videokamera Bilder von jedem Teil der Spielsitzung oder filmt automatisch in bestimmten Abständen. Der Zeitpunkt der Aufzeichnung der Spielsitzung kann über die Anwendung auf dem Mobilgerät 8 als operatives Bedienfeld oder auf dem stationären Touchscreen-Bedienfeld 13 eingestellt werden. Die Foto- und/oder Videokameras sind funktionell mit dem zentralen Steuerungsgerät 7 verbunden. Anschließend werden die aufgenommenen Videos und Bilder von dem zentralen Steuerungsgerät auf einem Speichermedium gespeichert und können vom Benutzer z.B. über das Internet abgerufen werden.

### Bereitschaftsbeleuchtung

Darüber hinaus ist der Spielraum zusätzlich mit einer Bereitschaftsbeleuchtung 9 ausgestattet, die es dem Benutzer ermöglicht, sich sicher im abgedunkelten Spielraum zu bewegen. Verschiedene Phasen einer Spielsitzung können unterschiedliche Beleuchtungsstärken im Spielraum erfordern. Zum Beispiel sollte die Beleuchtung des Spielraums am Ende der Spielzeit ausreichend sein, damit die Benutzer ihre Sachen einsammeln und den Spielraum in Ruhe verlassen können, ohne etwas zu vergessen. Zu Beginn des Spiels sollte die Beleuchtung des Spielraums so sein, dass die Benutzer, die aus einem hell erleuchteten Bereich kommen, die Möglichkeit haben, sich an die Dunkelheit zu gewöhnen, wenn sie den dunklen Raum betreten. Die Intensität der Bereitschaftsbeleuchtung 9 kann auf verschiedene feste Werte eingestellt werden oder über einen bestimmten Zeitraum stufenlos von einem Wert zum anderen wechseln. Die automatische Steuerung der Bereitschaftsbeleuchtung 9 erfolgt durch das zentrale Steuerungsgerät 7, wobei die gewünschte Beleuchtungsart am administrativen Bedienfeld 7a eingestellt wird. Über einen stationären Touchscreen 13 der Benutzersteuerung hat der Benutzer zudem die Möglichkeit, den Bereitschaftsbeleuchtungsmodus bei unvorhergesehenen Situationen zu ändern. Da die Lumineszenz der angeregten Leuchtstoffbeschichtung 3 der Arbeitswand 1a nur in einem abgedunkelten Raum sichtbar ist, kann übermäßiges Licht der Bereitschaftsbeleuchtung den Spieleffekt stören, wobei es den Kontrast des Lichtbildes auf der Arbeitswand 1a verringert. Daher sollte die Bereitschaftsbeleuchtung 9 während des Spiels eine Mindesthelligkeit haben, die ein bequemes Bewegen im Spielraum ermöglicht. Andererseits kann jede Beleuchtung, auch die Bereitschaftsbeleuchtung 9, eine Beleuchtung der Arbeitswand 1a verursachen. Daher ist die Bereitschaftsbeleuchtung 9 im Spielraum von der Arbeitswand 1a weg gerichtet. Außerdem kann die Bereitschaftsbeleuchtung 9 in einem solchen Wellenlängenbereich gewählt werden, dass die durch die Bereitschaftsbeleuchtung 9 verursachte zusätzliche Anregung der Leuchtstoffbeschichtung 3 minimal ist.

In einer Ausführungsform ist die Bereitschaftsbeleuchtung in Form einer LED-Leiste an mindestens einer Wand des Spielraums in Bodennähe befestigt. Dabei ist die LED-Leiste so ausgerichtet, dass das Leuchten der Leiste auf den Boden gerichtet ist.

Außerdem gibt es im Spielraum eine Deckenbeleuchtung, die zwischen den Spielen und während der vorbeugenden Wartung des Spielraums genutzt werden kann.

### Beispiel für die Funktionsweise eines Spielraumsystems

Im Folgenden ist ein Beispiel für ein Verfahren zum Betrieb eines Spielraumsystems gemäß der vorliegenden Erfindung beschrieben. Es versteht sich für den Fachmann, dass dieses Beispiel nicht auf eine Vielzahl möglicher Verwendungen des Spielraumsystems beschränkt ist. Das folgende Beispiel veranschaulicht lediglich die Funktionsweise der einzelnen Komponenten des beanspruchten Systems sowie eines Spielraumsystems insgesamt.

Das Verfahren zum Betrieb des Spielraumsystems umfasst mindestens die folgenden Schritte:
- Registrierung und Gewährung des Zugangs für den Benutzer,
- Bereitstellung erster Spielinformationen für den Benutzer,
- Befestigung mindestens einer Schablone 14, 25 an mindestens einer Arbeitswand 1a des Spielraumsystems,
- Steuerung der Aktivierung der gepulsten Lichtquelle über ein operatives Bedienfeld während einer Spielsitzung,
- Anregung der Leuchtstoffbeschichtung 3 durch die gepulste Weitwinkel-Lichtquelle 6,
- Bereitstellung von aktuellen Spielinformationen für den Benutzer während der Spielsitzung,
- Verwendung der Bereitschaftsbeleuchtung 9 während der Spielsitzung und der Deckenbeleuchtung zwischen den Spielsitzungen.

In einer Ausführungsform des beanspruchten Verfahrens betritt mindestens ein Benutzer 2 den Spielraum vor Beginn der Spielsitzung. Dabei registriert die Zugangskontrolleinheit 16 den mindestens einen Benutzer 2, der eingetreten ist. Die Registrierung kann z.B. durch Einscannen der Eintrittskarte des Benutzers mit einem in die Zugangskontrolleinheit integrierten Scanner erfolgen. In einer anderen Ausführungsform gibt der Benutzer den im Voraus festgelegten Zugangscode in die Zugangskontrolleinheit 16 ein. Außerdem verhindert die Zugangskontrolleinheit, dass die Tür zum Spielraum während des Spiels von außen unbefugt geöffnet wird, um ein Aufleuchten der Leuchtstoffbeschichtung der Arbeitswand 1a durch Licht von außerhalb des Spielraums zu vermeiden. Die Bereitschaftsbeleuchtung 9 im Spielraum ermöglicht es dem Benutzer, sich an die Verdunkelung des Spielraums anzupassen.

Mindestens eine Spielinformationsanzeigeeinrichtung 11 zeigt anfängliche Spielinformationen an, wie z. B. die Dauer der Spielsitzung und die verbleibende Zeit bis zum Ende der Spielsitzung. Außerdem kann die Spielinformationsanzeigeeinrichtung 11 eine Liste möglicher Spielszenarien anzeigen, aus denen der Benutzer 2 wählen kann.

Während der Spielsitzung benutzen der oder die Benutzer 2 ein operatives Bedienfeld in Form einer feststehenden Taste 5 oder einer Fernsteuerung 4, um die Lichtquelle 6 zu aktivieren. Dabei kann der Benutzer 2 auf dem stationären Touchscreen 13 den sofortigen Aktivierungsmodus der Lichtquelle 6 oder den Countdown-Timer-Startmodus auswählen, um die Lichtquelle 6 mit einer vorher festgelegten Zeitverzögerung zu aktivieren. Die Spielinformationsanzeigeeinrichtung 11 zeigt die eingestellte Verzögerungszeit sowie die Countdown-Zeit für den laufenden Timer an.

Darüber hinaus kann der Benutzer 2 eine Anwendung auf seinem Mobilgerät 8 installieren. In diesem Fall kann der Benutzer 2 das Mobilgerät 8 als Fernsteuerung mit erweiterten Funktionen verwenden. Insbesondere kann der Benutzer 2 in der Anwendung auf dem Mobilgerät 8 ein Spielszenario aus einer Liste von vorgeschlagenen Spielszenarien auswählen und eine Verzögerungszeit für den Countdown-Timer 10 einstellen.

Der Benutzer 2 schaltet die Lichtquelle 6 mit dem operativen Bedienfeld ein. Durch die Beleuchtung beginnen die angeregten Bereiche der Leuchtstoffbeschichtung 3 in dem abgedunkelten Spielraum zu leuchten. Die durch die Silhouette mindestens eines Benutzers vor Strahlung geschützten Bereiche der Leuchtstoffbeschichtung 3 sowie der durch mindestens eine Schablone 14 abgedeckte Bereich bleiben dunkel. Falls gewünscht, kann der Benutzer 2 die verbleibenden dunklen Bereiche der Leuchtstoffbeschichtung zusätzlich mit einer eng gebündelten Lichtquelle beleuchten, die z. B. in der Fernsteuerung 4 befestigt ist oder als separates Element des Spielraums ausgeführt ist (in den Figuren nicht dargestellt). Ein zusätzliches Bild kann auch auf die bereits angeregten Bereiche der Arbeitswand 1a aufgebracht werden. In diesem Fall wird die Stärke der Bereitschaftsbeleuchtung 9 auf einen Wert reduziert, bei dem die Bereitschaftsbeleuchtung 9 die Leuchtstoffbeschichtung 3 nicht beleuchtet.

Nach dem Einschalten der Lichtquelle 6 zeigt das Display 11 eine Zeitspanne an, in der eine weitere Aktivierung der Lichtquelle 6 untersagt ist. Während dieser Zeit wird der Versuch des Benutzers 2, die Quelle zu aktivieren, von dem zentralen Steuerungsgerät 7 blockiert. Die Mindestzeit zwischen zwei aufeinanderfolgenden Aktivierungen der Lichtquelle 6 wird als Systemeinstellung am zentralen Steuerungsgerät 7 in Abhängigkeit von den Eigenschaften der Leuchtstoffbeschichtung und der Lichtquelle festgelegt. Der Betreiber des Spielraums stellt die angegebene Zeit auf dem administrativen Bedienfeld 7a des zentralen Steuerungsgeräts 7 ein.

Während der Spielsitzung erhält der Benutzer 2 Spielinformationen auf mindestens einer Spielinformationsanzeigeeinrichtung 11 im Spielraum und in Form von Audiomeldungen und Soundeffekten über ein Audiogerät 12.

Für den Fall, dass der Benutzer 2 die Fernsteuerung 4 während des Spiels fallen lässt oder verliert, kann die Fernsteuerungserkennungseinheit 15 verwendet werden, die im abgedunkelten Spielraum gut sichtbar ist.

Während des Spielens wird das Spiel auf Wunsch des Benutzers mit einer Foto- und/oder Videokamera aufgenommen.

Am Ende der Spielsitzung wird die Bereitschaftsbeleuchtung 9 hochgefahren, damit mindestens ein Benutzer 2 in Ruhe seine Sachen einsammeln und den Spielraum verlassen kann, ohne etwas zu vergessen. Gleichzeitig wird auf der Spielinformationsanzeigeeinrichtung 11 eine Erinnerung angezeigt, um den Benutzer 2 daran zu erinnern, die Fernsteuerung 4 auf der Halterung der Fernsteuerungserkennungseinheit 15 zu lassen. Die Erinnerung auf der Spielinformationsanzeigeeinrichtung 11 kann auch durch eine Audiomeldung des Audiogeräts 12 dupliziert werden.

Nach Beendigung der Spielsitzung kann die Lichtquelle 6 bis zur nächsten Spielsitzung nicht mehr aktiviert werden. Die Mindestzeit zwischen zwei aufeinander folgenden Sitzungen wird als Systemeinstellung am zentralen Steuerungsgerät 7 in Abhängigkeit von den Eigenschaften der Leuchtstoffbeschichtung festgelegt. Der Betreiber des Spielraums stellt die angegebene Zeit auf dem administrativen Bedienfeld 7a des zentralen Steuerungsgeräts 7 ein. Diese Zeit gewährleistet ein vollständiges "Abkühlen" der Leuchtstoffbeschichtung bis zum Beginn der nächsten Sitzung.

Am Ende der Spielsitzung werden die von der Foto- und/oder Videokamera aufgenommenen Informationen auf dem Server gespeichert, so dass der Benutzer Zugriff auf die gespeicherten Informationen hat.

## Patentansprüche

1. Spielraumsystem, umfassend:
- einen abdunkelbaren Raum, der durch Wände (1), einen Boden und eine Decke begrenzt ist, wobei mindestens ein Teil mindestens einer Wand (1, 1a) mit einer Leuchtstoffbeschichtung (3) versehen ist, wobei die Leuchtstoffbeschichtung (3) durch Licht im sichtbaren und/oder ultravioletten Bereich anregbar ist,
- eine gepulste Weitwinkel-Lichtquelle (6), die an oder in einer anderen Wand (1) gegenüber der mit der Leuchtstoffbeschichtung (3) versehenen Wand (1a) oder Decke des Spielraums oder an einer benutzersicheren Stelle innerhalb des Raums befestigt und zumindest auf die Leuchtstoffbeschichtung (3) gerichtet ist,
- mindestens eine Schablone (14, 25), die dazu geeignet ist, auf der Leuchtstoffbeschichtung (3) befestigt zu werden,
- ein Steuerungssystem des Spielraums,
- eine Bereitschaftsbeleuchtung (9),
**dadurch gekennzeichnet, dass**
das Spielraumsteuerungssystem umfasst:
- ein zentrales Steuerungsgerät (7), mit dem ein Bedienfeld (7a) für die administrative Steuerung des Spielraums funktionell verbunden ist,
- ein operatives Bedienfeld (4, 5, 8, 13) und eine mit dem Bedienfeld verbundene Taste zum Aktivieren der Lichtquelle,
wobei das operative Bedienfeld (4, 5, 8, 13) so ausgelegt ist, dass es mit dem zentralen Steuerungsgerät (7) verbindbar ist,
wobei das Bedienfeld (7a) für die administrative Steuerung des Spielraums so ausgelegt ist, dass die Abkühlzeit der Lichtquelle (6) und die Regenerationszeit der Leuchtstoffbeschichtung (3) einstellbar sind, und
wobei die Zeit für die Abkühlung der Lichtquelle und/oder die Regeneration der Leuchtstoffbeschichtung den erforderlichen Mindestzeitabstand zwischen zwei aufeinanderfolgenden Aktivierungen der Lichtquelle bestimmt.

2. System nach Anspruch 1, wobei das Spielraumsteuerungssystem ferner einen Countdown-Timer (10) umfasst, wobei das operative Bedienfeld (4, 5, 8, 13) so ausgelegt ist, dass es die Lichtquelle (6) sofort aktivieren kann oder der Countdown-Timer (10) vor der Aktivierung der Lichtquelle (6) eingeschaltet werden kann.

3. System nach Anspruch 1 oder 2, wobei das operative Bedienfeld (4, 5, 8, 13) in Form von mindestens einer stationären Taste (5) zum Aktivieren der gepulsten Weitwinkel-Lichtquelle (6) ausgeführt ist, wobei die Taste (5) an oder in der Wand des Spielraums oder an einem benutzersicheren Ort innerhalb des Raums befestigt ist, und/oder eines stationären Touchscreens (13), der im Spielraum befestigt ist, und/oder mindestens einer Fernsteuerung (4) mit der Fähigkeit zur drahtlosen Verbindung mit dem zentralen Steuerungsgerät (7) ausgeführt ist.

4. System nach einem der Ansprüche 1 bis 3, wobei das Spielraumsteuerungssystem ferner eine Spielraum-Zugangskontrolleinheit (16) zur Kontrolle des Zugangs zum Spielraum während der Verwendung der Leuchtstoffbeschichtung (3) umfasst, wobei die Zugangskontrolleinheit (16) so ausgelegt ist, dass sie sich mit dem zentralen Steuerungsgerät (7) verbinden kann.

5. System nach einem der vorhergehenden Ansprüche, wobei die mindestens eine Wand (1a) mit Leuchtstoffbeschichtung (3) eine Basis (21), eine Schicht (22) aus ferromagnetischem Material und eine Schicht aus Leuchtstoffbeschichtung (23) aufweist, wobei die mindestens eine Schablone (14, 25) mindestens einen Magneten (24) zur lösbaren Befestigung an der ferromagnetischen Magnetschicht (22) umfasst.

6. System nach einem der Ansprüche 3 bis 5, wobei ein mobiles Gerät (8) als Fernsteuerung (4) verwendet wird und die Taste zum Aktivieren der Lichtquelle (6) entweder als Taste des mobilen Gerätes (8) oder auf dem Display des mobilen Geräts (8) in der jeweiligen Anwendung ausgebildet ist.

7. System nach einem der vorhergehenden Ansprüche, wobei das System zusätzlich eine Foto- und/oder Videokamera zur Aufnahme des Spielverlaufs umfasst.

8. System nach einem der vorhergehenden Ansprüche 2 bis 7, wobei das System ferner mindestens eine Spielinformationsanzeigeeinrichtung (11) umfasst, die sich im Spielraum befindet, funktionell mit dem zentralen Steuerungsgerät (7) verbunden und so gestaltet ist, dass sie mindestens eines der folgenden Elemente anzeigt:
- eine minimal zulässige Zeit vor der anschließenden Aktivierung der Lichtquelle (6), die durch die Abkühlzeit der Lichtquelle (6) und/oder als Regenerationszeit der Leuchtstoffbeschichtung (3) bestimmt wird,
- Anzeige eines Countdown-Timers (10),
- Spielzeitzähler,
- Spielanleitung.

9. System nach einem der Ansprüche 3 bis 8, wobei die Fernsteuerung (4) ferner eine eng gebündelte Lichtquelle umfasst, um Bereiche der Oberfläche der Leuchtstoffbeschichtung (3) mit Licht anzuregen.

10. System nach einem der vorhergehenden Ansprüche, wobei das System ferner eine Audioeinrichtung (12) für die akustische Begleitung während der Benutzung des Spielraums umfasst, wobei die Audioeinrichtung (12) mindestens ein Lautsprecher ist.

11. System nach einem der Ansprüche 8 bis 10, wobei sich die gepulste Weitwinkel-Lichtquelle (6), das zentrale Steuerungsgerät (7), die Bereitschaftsbeleuchtung (9), der Countdown-Timer (10), die Spielinformationsanzeigeeinrichtung (11) und die Verbindungsleitungen zwischen ihnen an Orten außerhalb der unmittelbaren Reichweite des Benutzers (2) befinden.

12. System nach einem der vorhergehenden Ansprüche, wobei das zentrale Steuerungsgerät (7) mit dem Internet verbindbar ist, wobei das System ferner einen entfernten Server umfasst, der mit dem zentralen Steuerungsgerät verbindbar ist.

13. System nach Anspruch 12, wobei der entfernte Server mit der Fähigkeit ausgestattet ist:
- Raumbuchungen durch den Benutzer über eine Webanwendung vorzunehmen,
- Informationen über die Buchung einer Spielsitzung an das zentrale Steuerungsgerät des Raums zu übermitteln, um sowohl den physischen Zugang zum Raum als auch die Möglichkeit der Steuerung des Raums durch den Benutzer über die Bedienelemente im Raum zu ermöglichen,
- den Zugang zur Steuerung des Raums über eine Web- oder Mobilanwendung, um eine Spielsitzung zu erstellen, zu gewähren oder zu verweigern, wobei die Raumsteuerung nur innerhalb der Spielsitzung möglich ist,
- Echtzeit-Befehle zur Steuerung der Weitwinkel-Lichtquelle sowie von Spielszenarien von der Mobilanwendung innerhalb einer Spielsitzung an das zentrale Steuerungsgerät des Spielraums zu übertragen,
- dem Benutzer die Möglichkeit zu geben, Bilder seiner Spielsitzung von dem zentralen Steuerungsgerät des Raums abzurufen.

14. Verfahren zum Betreiben eines Spielraumsystems nach einem der vorhergehenden Ansprüche, wobei das Verfahren mindestens die folgenden Schritte umfasst:
- Registrierung und Gewährung des Zugangs für den Benutzer,
- Bereitstellung erster Spielinformationen für den Benutzer,
- Befestigung von mindestens einer Schablone (14, 25) auf der Leuchtstoffbeschichtung (3) von mindestens einer Wand (1, 1a) des Spielraumsystems,
- Steuerung der Aktivierung der gepulsten Lichtquelle über ein operatives Bedienfeld (4, 5, 8, 13) während einer Spielsitzung,
- Anregung der Leuchtstoffbeschichtung (3) mittels einer gepulsten Weitwinkel-Lichtquelle (6),
- Bereitstellung von aktuellen Spielinformationen für den Benutzer während der Spielsitzung,
- Verwendung von Bereitschaftsbeleuchtung (9) während der Spielsitzung und Deckenbeleuchtung zwischen den Spielsitzungen.

## Claims

1. A playroom system, comprising:
- a dimmable room that is limited by walls (1), a floor and a ceiling, wherein at least one part of at least one wall (1, 1a) is provided with a fluorescent coating (3), wherein the fluorescent coating (3) is excitable by light in visible and/or ultraviolet range,
- a pulsed wide-angle light source (6) that is mounted on or in another wall (1) opposite the wall (1a) or ceiling of the playroom provided with the fluorescent coating (3) or at a user-safe location within the room and is directed at least onto the fluorescent coating (3),
- at least one template (14, 25) that is suitable for being attached to the fluorescent coating (3),
- a control system for the playroom,
- a standby light (9),
**characterized in that**
the playroom control system comprises:
- a central control device (7) to which a control panel (7a) for the administrative control of the playroom is functionally connected,
- an operative control panel (4, 5, 8, 13) and a button connected to the control panel for activating the light source,
wherein the operative control panel (4, 5, 8, 13) is designed such that it is connectable to the central control device (7),
wherein the control panel (7a) for the administrative control of the playroom is designed such that the cooling time of the light source (6) and the regeneration time of the fluorescent coating (3) are adjustable, and
wherein the time for cooling the light source and/or regenerating the fluorescent coating determines the minimum time interval required between two successive activations of the light source.

2. The system according to claim 1, wherein the playroom control system further comprises a countdown timer (10), wherein the operative control panel (4, 5, 8, 13) is designed to activate the light source (6) immediately or to switch on the countdown timer (10) prior to activating the light source (6).

3. The system according to claim 1 or 2, wherein the operative control panel (4, 5, 8, 13) is implemented in the form of at least one stationary button (5) for activating the pulsed wide-angle light source (6), wherein the button (5) is mounted on or in the wall of the playroom or at a user-safe location within the room, and/or of a stationary touch screen (13) mounted in the playroom, and/or of at least one remote control (4) with the ability to connect wirelessly to the central control device (7).

4. The system according to one of claims 1 to 3, wherein the playroom control system further comprises a playroom access control unit (16) for controlling access to the playroom during the use of the fluorescent coating (3), wherein the access control unit (16) is designed to connect itself to the central control device (7).

5. The system according to one of the preceding claims, wherein the at least one wall (1a) with fluorescent coating (3) comprises a base (21), a layer (22) of a ferromagnetic material and a layer of fluorescent coating (23), wherein the at least one template (14, 25) comprises at least one magnet (24) for detachable attachment to the ferromagnetic magnet layer (22).

6. The system according to one of claims 3 to 5, wherein a mobile device (8) is used as a remote control (4) and the button for activating the light source (6) is designed either as a button of the mobile device (8) or on the display of the mobile device (8) in the respective application.

7. The system according to any of the preceding claims, wherein the system additionally comprises a photo and/or a video camera for recording the course of the game.

8. The system according to one of the preceding claims 2 to 7, wherein the system further comprises at least one game information display device (11) located in the playroom, operatively connected to the central control device (7) and configured to display at least one of the following elements:
- a minimum permissible time before the subsequent activation of the light source (6), that is determined by the cooling time of the light source (6) and/or as the regeneration time of the fluorescent coating (3),
- display of a countdown timer (10),
- playing time counter,
- game instructions.

9. The system according to one of claims 3 to 8, wherein the remote control (4) further comprises a narrowly focused light source to excite areas of the surface of the fluorescent coating (3) with light.

10. The system according to one of the preceding claims, wherein the system further comprises an audio device (12) for acoustic accompaniment during use of the playroom, wherein the audio device (12) is at least one loudspeaker.

11. The system according to one of claims 8 to 10, wherein the pulsed wide-angle light source (6), the central control device (7), the standby light (9), the countdown timer (10), the game information display device (11) and the connecting lines between them are located at locations out of the immediate reach of the user (2).

12. The system according to one of the preceding claims, wherein the central control device (7) is connectable to the Internet, the system further comprising a remote server connectable to the central control device.

13. The system of claim 12, wherein the remote server is provided with the capability to:
- carry out room bookings by the user via a web application,
- transmit information about the booking of a game session to the room's central control device to enable both, the physical access to the room and the possibility for the user to control the room via the control elements in the room,
- grant or deny access for controlling the room via a web or mobile application to create a game session, wherein the room control is only possible within the game session,
- transmit real-time commands to control the wide-angle light source and game scenarios from the mobile application to the playroom's central control device within a game session,
- allow the user to retrieve images of his game session from the room's central control unit.

14. A method of operating a playroom system according to one of the preceding claims, the method comprising at least the following steps:
- registration of and granting access to the user,
- provision of initial game information for the user,
- attachment of at least one template (14, 25) to the fluorescent coating (3) of at least one wall (1, 1a) of the playroom system,
- controlling the activation of the pulsed light source via an operative control panel (4, 5, 8, 13) during a game session,
- excitation of the fluorescent coating (3) by means of a pulsed wide-angle light source (6),
- provision of up-to-date game information for the user during the game session,
- use of standby lighting (9) during the game session and ceiling lighting between game sessions.

## Revendications

1. Système de salle de jeu, comprenant:
- une salle pouvant être plongée dans l'obscurité, qui est délimitée par des murs (1), un sol et un plafond, au moins une partie d'au moins un mur (1, 1a) étant munie d'un revêtement fluorescent (3), le revêtement fluorescent (3) pouvant être excité par de la lumière dans une zone visible et/ou ultraviolette,
- une source de lumière pulsée à grand angle (6) qui est fixée sur ou dans un autre mur (1) opposé au mur (1a) prévu avec le revêtement fluorescent (3) ou au plafond de la salle de jeu ou à un endroit sûr pour l'utilisateur à l'intérieur de la salle et qui est orientée au moins vers le revêtement fluorescent (3),
- au moins un gabarit (14, 25) qui est approprié afin d'être fixé sur le revêtement fluorescent (3),
- un système de commande de la salle de jeu,
- un éclairage de veille (9),
**caractérisé en ce que**
le système de commande de salle de jeu comprend :
- un appareil de commande central (7) auquel est relié de manière fonctionnelle un panneau de commande (7a) pour la commande administrative de la salle de jeu,
- un panneau de commande opérationnel (4, 5, 8, 13) et une touche connectée au panneau de commande afin d'activer la source de lumière,
dans lequel le panneau de commande opérationnel (4, 5, 8, 13) est conçu afin de pouvoir être connecté à l'appareil de commande central (7),
dans lequel le panneau de commande (7a) pour la commande administrative de la salle de jeu est conçu de manière à ce que le temps de refroidissement de la source de lumière (6) et le temps de régénération du revêtement fluorescent (3) puissent être réglés, et
dans lequel le temps de refroidissement de la source de lumière et/ou de régénération du revêtement fluorescent détermine(nt) l'intervalle de temps minimum requis entre deux activations successives de la source de lumière.

2. Système selon la revendication 1, dans lequel le système de commande de salle de jeu comprend en outre une minuterie de compte à rebours (10), dans lequel le panneau de commande opérationnel (4, 5, 8, 13) est conçu de sorte qu'il peut activer immédiatement la source de lumière (6) ou il peut allumer la minuterie de compte à rebours (10) avant l'activation de la source de lumière (6).

3. Système selon la revendication 1 ou 2, dans lequel le panneau de commande opérationnel (4, 5, 8, 13) est réalisé sous la forme d'au moins une touche fixe (5) afin d' activer la source de lumière pulsée à grand angle (6), dans lequel la touche (5) est fixée sur ou dans le mur de la salle de jeu ou en un lieu sûr pour l'utilisateur à l'intérieur de la salle, et/ou d'un écran tactile fixe (13) qui est fixé dans la salle de jeu et/ou d'au moins une télécommande (4) avec la capacité d'être connectée sans fil à l'appareil de commande central (7).

4. Système selon l'une quelconque des revendications 1 à 3, dans lequel le système de commande de salle de jeu comprend en outre une unité de contrôle d'accès à la salle de jeu (16) permettant de contrôler l'accès à la salle de jeu lors de l'utilisation du revêtement fluorescent (3), dans lequel l'unité de contrôle d'accès (16) est conçue de sorte qu'elle puisse se connecter à l'appareil de commande central (7).

5. Système selon l'une quelconque des revendications précédentes, dans lequel le au moins un mur (1a) avec le revêtement fluorescent (3) présente une base (21), une couche (22) de matériau ferromagnétique et une couche de revêtement fluorescent (23), dans lequel le au moins un gabarit (14, 25) comprend au moins un aimant (24) pour une fixation amovible sur la couche magnétique ferromagnétique (22).

6. Système selon l'une quelconque des revendications 3 à 5, dans lequel un appareil mobile (8) est utilisé comme télécommande (4) et la touche afin d'activer la source de lumière (6) est réalisée soit sous la forme d'une touche de l'appareil mobile (8), soit sur l'écran de l'appareil mobile (8) dans l'application respective.

7. Système selon l'une quelconque des revendications précédentes, dans lequel le système comprend en outre un appareil photographique et/ou une caméra vidéo permettant d'enregistrer le déroulement du jeu.

8. Système selon l'une quelconque des revendications précédentes 2 à 7, dans lequel le système comprend en outre au moins un dispositif d'affichage d'informations de jeu (11), qui est situé dans la salle de jeu, est connecté de manière fonctionnelle à l'appareil de commande central (7) et est conçu de sorte qu'il affiche au moins l'un des éléments suivants :
- un temps minimum autorisé avant l'activation ultérieure de la source de lumière (6), qui est déterminé par le temps de refroidissement de la source de lumière (6) et/ou par le temps de régénération du revêtement fluorescent (3),
- un affichage d'une minuterie à compte à rebours (10),
- un compteur de temps de jeu,
- un manuel du jeu.

9. Système selon l'une quelconque des revendications 3 à 8, dans lequel la télécommande (4) comprend en outre une source de lumière à faisceau étroit permettant d'exciter des zones de la surface du revêtement fluorescent (3) avec de la lumière.

10. Système selon l'une quelconque des revendications précédentes, dans lequel le système comprend en outre un dispositif audio (12) pour l'accompagnement acoustique pendant l'utilisation de la salle de jeu, le dispositif audio (12) étant au moins un haut-parleur.

11. Système selon l'une quelconque des revendications 8 à 10, dans lequel la source de lumière pulsée à grand angle (6), l'appareil de commande central (7), l'éclairage de veille (9), la minuterie à compte à rebours (10), le dispositif d'affichage d'informations de jeu (11) et les lignes de connexion entre eux sont situés dans des endroits hors de portée immédiate de l'utilisateur (2).

12. Système selon l'une quelconque des revendications précédentes, dans lequel l'appareil de commande central (7) peut être connecté à l'Internet, le système comprenant en outre un serveur distant pouvant être connecté à l'appareil de commande central.

13. Système selon la revendication 12, dans lequel le serveur distant est conçu avec la capacité :
- de permettre à l'utilisateur d'effectuer des réservations de salle via une application Web,
- de transmettre des informations sur la réservation d'une session de jeu à l'appareil de commande central de la salle afin de permettre à la fois l'accès physique à la salle et la possibilité pour l'utilisateur de commander la salle via les éléments de réglage dans la salle,
- d'accéder à la commande de la salle via une application Web ou mobile afin de créer, d'accorder ou de refuser une session de jeu, la commande de la salle n'étant possible que pendant la session de jeu,
- de transmettre des instructions en temps réel afin de commander la source de lumière à grand angle ainsi que des scénarios de jeu de l'application mobile pendant une session de jeu à l'appareil de commande central de la salle de jeu,
- de donner à l'utilisateur la possibilité de récupérer des images de sa session de jeu à partir de l'appareil de commande central de la salle.

14. Procédé d'exploitation d'un système de salle de jeu selon l'une quelconque des revendications précédentes, ledit procédé comprenant au moins les étapes suivantes consistant à :
- enregistrer et octroyer l'accès à l'utilisateur,
- fournir des premières informations de jeu à l'utilisateur,
- fixer au moins un gabarit (14, 25) sur le revêtement fluorescent (3) d'au moins un mur (1, 1a) du système de salle de jeu,
- commander l'activation de la source de lumière pulsée via un panneau de commande opérationnel (4, 5, 8, 13) pendant une session de jeu,
- exciter le revêtement fluorescent (3) au moyen d'une source de lumière pulsée à grand angle (6),
- fournir des informations de jeu actuelles à l'utilisateur pendant la session de jeu,
- utiliser l'éclairage de veille (9) pendant la session de jeu et l'éclairage de plafond entre les sessions de jeu.
